# EUROPÄISCHE PATENTSCHRIFT

(11) **EP 1 889 700 B1**
(45) Veröffentlichungstag und Bekanntmachung des Hinweises auf die Patenterteilung: **18.02.2009**
(21) Anmeldenummer: 06017269.9
(22) Anmeldetag: 18.08.2006
(51) Int. Cl.: B27C 9/04, B27M 3/08, B23Q 39/02, B23B 39/16

(54) **Multifunktionsaggregat**
Multifunction unit
Ensemble multifonctions

(43) Veröffentlichungstag der Anmeldung: 20.02.2008
(73) Patentinhaber: Homag Holzbearbeitungssysteme AG, 72296 Schopfloch (DE)
(72) Erfinder: Sturm, Gotthilf, 72293 Glatten (DE); Gauß, Achim, 72280 Dornstetten/Hallwangen (DE)
(74) Vertreter: HOFFMANN EITLE

(56) Entgegenhaltungen:
- EP-A1- 0 455 095
- EP-A2- 1 099 522
- DE-A1- 3 024 701
- DE-A1- 3 914 008
- JP-A- 7 124 907
- US-A- 5 720 090

## Beschreibung

### Technisches Gebiet

Die Erfindung betrifft ein Multifunktionsaggregat zur Bearbeitung von Werkstücken, die zumindest teilweise aus Holz, Holzwerkstoffen, Kunststoffen oder dergleichen bestehen, nach dem Oberbegriff von Anspruch 1.

### Stand der Technik

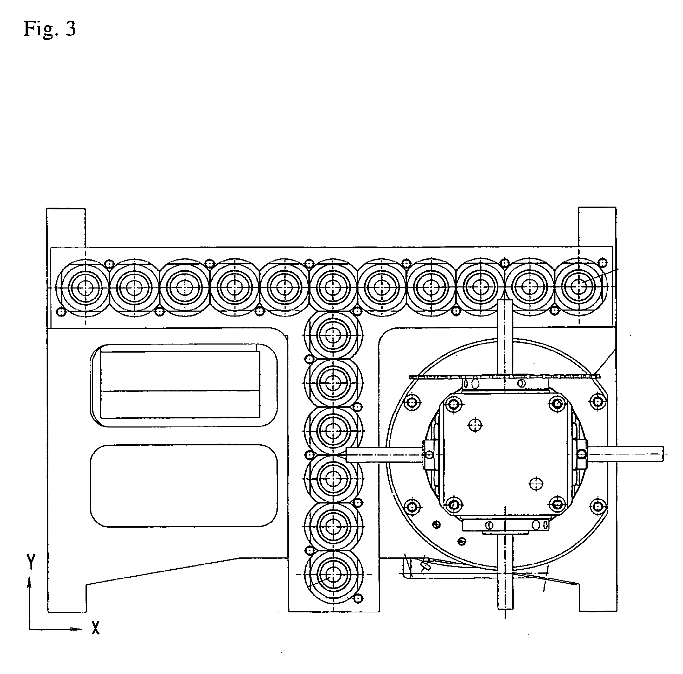

Aggregate der eingangs genannten Art werden beispielsweise im Bereich des Möbel- und Küchenbaus eingesetzt, um Korpusteile mit Bohrungen (z.B. für Dübel), Nuten (z. B. für Rückwände) oder dergleichen zu versehen. Der Aufbau eines der Anmelderin bekannten Aggregates ist in Fig. 3 schematisch in einer Draufsicht gezeigt. Das Aggregat besitzt eine Mehrzahl von vertikalen Bohrspindeln, eine Mehrzahl von horizontalen Bohrspindeln und einer Säge. Dabei ist die Säge mit einer Einheit mit vier horizontalen Bohrspindeln integriert, und diese Einheit ist um eine vertikale Achse (senkrecht zur Zeichenebene in Fig. 3) drehbar, um horizontale Bohrarbeiten und Sägearbeiten in mehreren Richtungen zu ermöglichen und dem Aggregat eine ausreichende Flexibilität zu verleihen.

Um darüber hinaus auch vertikale Bohrarbeiten in mehreren Richtungen zu ermöglichen, weist das Aggregat zwei Reihen von vertikalen Bohrspindeln auf, die orthogonal zueinander angeordnet sind. Diese Anordnung erfordert eine hohe Anzahl vertikaler Bohrspindeln, was zu einem hohen konstruktiven Aufwand und einem hohen Gewicht führt und einen starken Antrieb erfordert.

Ferner ist am Markt ein CNC-Bearbeitungszentrum "Alberti-Polar" verfügbar, bei dem eine komplette Aggregatgruppe um 360° drehbar ist.

Ferner offenbart die EP 109 95 22 A2 ein Aggregat nach dem Oberbegriff von Anspruch 1.

### Darstellung der Erfindung

Es ist daher Aufgabe der vorliegenden Erfindung, ein Aggregat der eingangs genannten Art bereitzustellen, das bei hoher Flexibilität eine einfache Konstruktion besitzt.

Diese Aufgabe wird erfindungsgemäß durch ein Multifunktionsaggregat mit den Merkmalen von Anspruch 1 gelöst. Besonders vorteilhafte Weiterbildungen sind in den abhängigen Ansprüchen angegeben.

Der Erfindung liegt der Gedanke zugrunde, die Anzahl der vertikalen Bohrspindeln des Multifunktionsaggregats vermindern zu können, ohne die Flexibilität des Aggregats zu beeinträchtigen. Zu diesem Zweck ist erfindungsgemäß vorgesehen, dass das gattungsgemäße Multifunktionsaggregat über eine Lagereinrichtung derart gelagert und antreibbar ist, dass es um mindestens eine vertikale Drehachse verdreht werden kann. Auf diese Weise ist es in den meisten Anwendungsfällen möglich, auf eine vollständige zweite Reihe von vertikalen Bohrspindeln zu verzichten, was die Konstruktion des Aggregats stark vereinfacht und zu einer drastischen Gewichtsverminderung führt, zumal für die wenigen vertikalen Bohrspindeln auch ein leichterer Antrieb eingesetzt werden kann.

Falls andererseits bei einem erfindungsgemäßen Multifunktionsaggregat dennoch eine hohe Anzahl von vertikalen Bohrspindeln beibehalten wird, lässt sich die Flexibilität des Aggregats beträchtlich erhöhen, da die zusätzlichen vertikalen Bohrspindeln nicht zur Ermöglichung einer Bearbeitung in mehreren Drehpositionen eingesetzt werden müssen, sondern beispielsweise mit anderen Bohrerdurchmessern bestückt werden können, um die Bandbreite der Bearbeitungsmöglichkeiten zu erhöhen.

Obgleich die mindestens eine Säge im Rahmen der vorliegenden Erfindung prinzipiell an einer beliebigen Stelle angeordnet sein kann, hat es sich als vorteilhaft erwiesen, dass die Säge an einem Gehäuse mindestens einer der vertikalen und/oder horizontalen Bohrspindeln angebracht ist. Hierdurch ergibt sich eine einfache und leichtgewichtige Konstruktion. Dabei ist es besonders bevorzugt, dass die mindestens eine Säge über einen gemeinsamen Antrieb mit den vertikalen und/oder horizontalen Bohrspindeln verfügt, sodass auf einen zusätzlichen bzw. eigenen Antrieb für die mindestens eine Säge verzichtet werden kann, mit entsprechenden Vorteilen im Hinblick auf die Konstruktion, das Gewicht, etc.

Gemäß einer Weiterbildung der Erfindung ist vorgesehen, dass das Multifunktionsaggregat ferner mindestens eine Schnittstelle zum Anbringen mindestens eines weiteren Bearbeitungsaggregats aufweist. Hierdurch kann die Variabilität des erfindungsgemäßen Multifunktionsaggregats weiter erhöht werden, sodass das Aggregat auf eine fast unbegrenzte Vielzahl von Bearbeitungsarten angepasst werden kann. Dabei ist es besonders bevorzugt, dass die mindestens eine Schnittstelle eine Anbringfläche aufweist und insbesondere eingerichtet ist, ein angebrachtes Aggregat zumindest mit Antriebsleistung und/oder Energie und/oder Fluids und/oder Daten zu versorgen. Hierdurch muss die Konfiguration des Multifunktionsaggregats nicht in Abhängigkeit von den jeweiligen, anzubringenden Aggregat verändert werden, sondern das jeweilige Aggregat kann über die Schnittstelle mit den benötigten Eingangs- und Ausgangsgrößen versorgt werden.

Bei dem an der Schnittstelle anzubringenden Aggregat kann es sich um eine Vielzahl unterschiedlicher Aggregate handeln, wie sie im Bereich der Bearbeitung von Werkstücken der hier zur Rede stehenden Art zum Einsatz kommen. In Kombination mit den übrigen Werkzeugen bzw. Aggregaten des erfindungsgemäßen Multifunktionsaggregats hat es sich jedoch als vorteilhaft erwiesen, dass das mindestens eine Aggregat ein Fräsaggregat und/oder ein Bündigfräsaggregat mit Abtrenneinrichtung, insbesondere Ziehklinge, und/oder ein Mehrspindelbohrkopf ist.

Die vertikalen Bohrspindeln können im Rahmen der vorliegenden Erfindung in unterschiedlichsten Konfigurationen angeordnet sein. Für viele Anwendungen hat es sich als vorteilhaft erwiesen, dass vertikale Bohrspindeln in mindestens einer Reihe angeordnet sind, beispielsweise um in Korpusteilen eine Lochreihe für Regalböden oder dergleichen vorzusehen. Darüber hinaus ist gemäß einer Weiterbildung der Erfindung jedoch vorgesehen, dass mindestens eine weitere vertikale Bohrspindel angeordnet ist, die bevorzugt mit einem Bohrer ausgestattet werden kann, dessen Durchmesser von demjenigen in der mindestens einen Reihe abweicht. Hierdurch ergibt sich eine hohe Bearbeitungsvielfalt, bzw. Werkzeugwechselzeiten können entfallen.

In analoger Weise ist gemäß einer Weiterbildung der Erfindung vorgesehen, dass horizontale Bohrspindeln in mindestens zwei Richtungen angeordnet sind, die bevorzugt mit Bohrern unterschiedlichen Durchmessers ausgestattet werden können.

Gemäß einer Weiterbildung der Erfindung ist vorgesehen, dass die vertikale Drehachse des Multifunktionsaggregats innerhalb eines Gehäuses gelegen ist, das zumindest die vertikalen Bohrspindeln enthält bzw. durch zumindest diese gebildet ist. Hierdurch kann der Rotationsbereich des Multifunktionsaggregats minimiert werden, sodass sich ein geringer Platzbedarf und für die meisten Aggregate ein kurzer Rotationsweg mit entsprechend hoher Positioniergenauigkeit und schneller Arbeitsweise ergibt. Eine besonders kompakte Bau- und Arbeitsweise des erfindungsgemäßen Multifunktionsaggregat ergibt sich ferner, wenn gemäß einer Weiterbildung der Erfindung die mindestens eine Säge und/oder die mindestens eine Schnittstelle zumindest teilweise innerhalb eines Bereichs gelegen ist, der durch die am weitesten von der vertikalen Drehachse des Multifunktionsaggregats entfernten vertikalen Bohrspindeln während einer vollständigen Verdrehbewegung des Multifunktionsaggregats umschrieben wird.

### Kurze Beschreibung der Zeichnungen

Fig. 1 zeigt schematisch eine Perspektivansicht eines Multifunktionsaggregats gemäß der vorliegenden Erfindung;
Fig. 2 zeigt schematisch eine Draufsicht des in Fig. 1 gezeigten Multifunktionsaggregats;
Fig. 3 zeigt schematisch eine Draufsicht eines der Anmelderin bekannten Multifunktionsaggregats.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

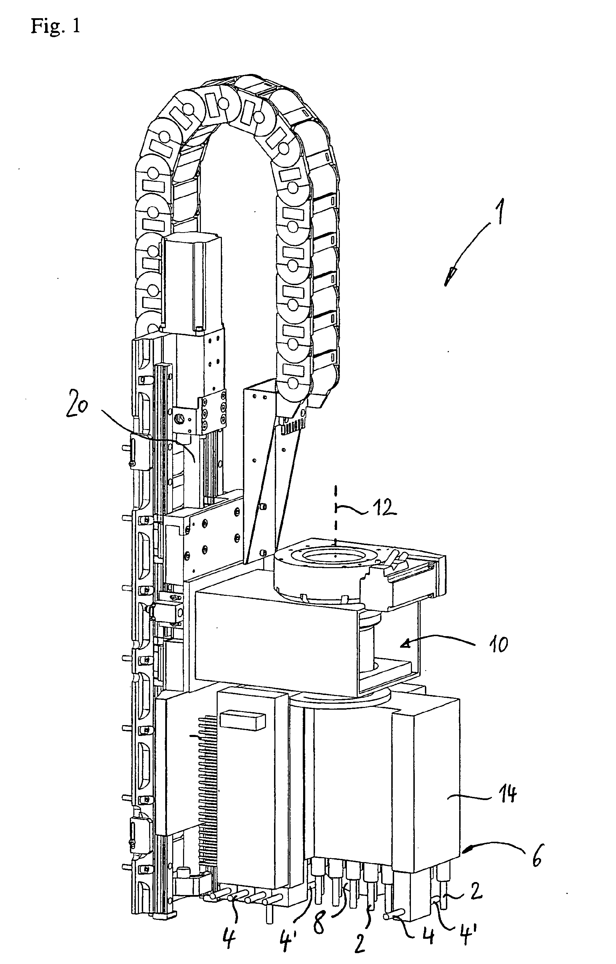

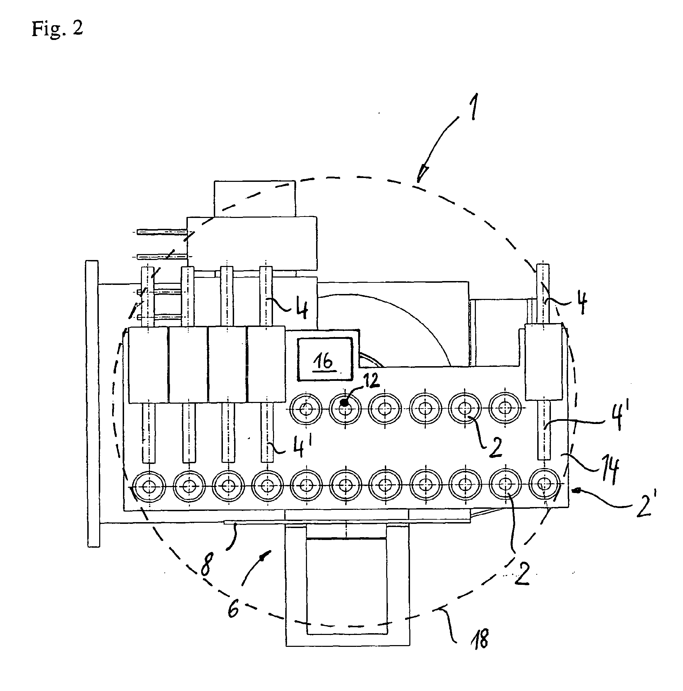

Ein Multifunktionsaggregat 1 als bevorzugte Ausführungsform der vorliegenden Erfindung ist in Fig. 1 und 2 schematisch in einer Perspektivansicht bzw. einer Draufsicht (Unteransicht) gezeigt. Das Multifunktionsaggregat kann eine freistehende Maschine sein oder in eine Fertigungsstraße oder dergleichen integriert sein und dient zur Bearbeitung von (meist plattenförmigen) Werkstücken, die in der vorliegenden Ausführungsform zumindest teilweise aus Holz, Holzwerkstoffen, Kunststoffen oder dergleichen bestehen, wie sie im Bereiche des Möbel- und Küchenbaus häufig zum Einsatz kommen.

Das Multifunktionsaggregat umfasst, wie in Fig. 2 am besten zu erkennen ist, in der vorliegenden Ausführungsform zwei Reihen von vertikalen Bohrspindeln 2, die im Wesentlichen parallel zueinander angeordnet sind. Dabei sind in den beiden Reihen z. B. Bohrer mit unterschiedlichen Durchmessern eingesetzt. Die vertikalen Bohrspindeln 2 sind in einem Gehäuse 14 zusammengefasst. An dem Gehäuse 14 sind ferner mehrere horizontale Bohrspindeln 4, 4' angeordnet, wobei die horizontalen Bohrspindeln 4 Bohrer aufweisen können, die einen größeren Durchmesser besitzen als diejenigen der horizontalen Bohrspindeln 4'.

Weiterhin ist an dem Gehäuse 14 eine Säge 6 angebracht, die ein Sägeblatt 8 mit einer im Wesentlichen horizontalen (d.h. in der Zeichenebene von Fig. 2 liegenden) Drehachse besitzt.

Die gesamte, vorstehend beschriebene Einheit ist über eine Lagereinrichtung 10, die in Fig. 1 am besten zu erkennen ist, derart gelagert und antreibbar, dass es um mindestens eine vertikale Achse 12 verdreht werden kann. Diese vertikale Achse 12 ist in Fig. 2 durch einen Punkt gezeigt und verläuft durch das Gehäuse 14, was auch in Fig. 1 zu erkennen ist.

Wie in Fig. 1 am besten zu erkennen ist, ist das Multifunktionsaggregat auch in vertikaler Richtung über eine Führungseinrichtung 20 verfahrbar. Ferner sind die horizontalen und vertikalen Spindeln 4, 2, obgleich in den Figuren nicht gezeigt, über einen geeigneten Antrieb von einer Ruheposition in eine Arbeitsposition ausstellbar, sodass unterschiedlichste Bohrbilder gefertigt werden können.

Darüber hinaus ist an dem Gehäuse 14 eine Schnittstelle 16 angeordnet, die nur in Fig. 2 nicht jedoch in Fig. 1 gezeigt ist. Die Schnittstelle 16 dient zum Anbringen mindestens eines weiteren Bearbeitungsaggregats, beispielsweise eines Fräsaggregats, eines Bündigfräsaggregats mit Abtrenneinrichtung (beispielsweise Ziehklinge) oder eines Mehrspindelbohrkopfes. Zu diesem Zweck weist die Schnittstelle 16 eine Anbringfläche auf, in der Anschluss-und Übertragungsmittel für Antriebsleistung, Energie, Fluids und Daten angeordnet sind, obgleich diese in Fig. 2 nicht näher gezeigt sind.

Ein Hauptarbeitsbereich 18 des erfindungsgemäßen Multifunktionsaggregats 1 ist in Fig. 2 durch einen gestrichelten Kreis dargestellt. Dieser Bereich ist derjenige Bereich, der durch die außen liegenden vertikalen Spindeln 2 während einer Verdrehbewegung des Multifunktionsaggregats 1 um die Achse 12 umschrieben wird. Innerhalb dieses Bereichs 18 liegen die wesentlichen Bauteile des erfindungsgemäßen Multifunktionsaggregats, insbesondere Bohrspindeln, die Schnittstelle 16 und auch der wesentliche Teil der Säge 6.

## Patentansprüche

1. Multifunktionsaggregat (1) zur Bearbeitung von Werkstücken, die zumindest teilweise aus Holz, Holzwerkstoffen, Kunststoffen oder dergleichen bestehen, mit:
einer Mehrzahl von vertikalen Bohrspindeln (2),
einer Mehrzahl von horizontalen Bohrspindeln (4), wobei
das Multifunktionsaggregat (1) über eine Lagereinrichtung (10) derart gelagert und antreibbar ist, dass es um mindestens eine vertikale Drehachse (12) verdreht werden kann,
**dadurch gekennzeichnet, dass**
das Multifunktionsaggregat mindestens eine fest angeordnete Säge (6), die mindestens ein Sägeblatt (8) mit einer horizontalen Drehachse aufweist, umfasst.

2. Multifunktionsaggregat nach Anspruch 1, **dadurch gekennzeichnet, dass** die mindestens eine Säge (6) an einem Gehäuse (14) mindestens einer der vertikalen (2) und/oder horizontalen (4) Bohrspindeln angebracht ist und bevorzugt über einen gemeinsamen Antrieb mit den vertikalen und/oder horizontalen Bohrspindeln verfügt.

3. Multifunktionsaggregat nach Anspruch 1 oder 2, **dadurch gekennzeichnet, dass** es ferner mindestens eine Schnittstelle (16) zum Anbringen mindestens eines weiteren Bearbeitungsaggregats aufweist.

4. Multifunktionsaggregat nach Anspruch 3, **dadurch gekennzeichnet, dass** die mindestens eine Schnittstelle (16) eine Anbringfläche aufweist und bevorzugt eingerichtet ist, ein angebrachtes Aggregat zumindest mit Antriebsleistung und/oder Energie und/oder Fluids und/oder Daten zu versorgen.

5. Multifunktionsaggregat nach Anspruch 3 oder 4, **dadurch gekennzeichnet, dass** das mindestens eine Aggregat ein Fräsaggregat und/oder ein Bündigfräsaggregat mit Abtrenneinrichtung, insbesondere Ziehklinge, und/oder ein Mehrspindelbohrkopf ist.

6. Multifunktionsaggregat nach einem der vorhergehenden Ansprüche, **dadurch gekennzeichnet, dass** vertikale Bohrspindeln (2) in mindestens einer Reihe (2') angeordnet sind, und dass mindestens eine weitere vertikale Bohrspindel (2) vorgesehen ist, die bevorzugt mit einem Bohrer ausgestattet werden kann, dessen Durchmesser von demjenigen in der mindestens einen Reihe abweicht.

7. Multifunktionsaggregat nach einem der vorhergehenden Ansprüche, **dadurch gekennzeichnet, dass** horizontale Bohrspindeln (4) in mindestens zwei Richtungen angeordnet sind, die bevorzugt mit Bohrern unterschiedlichen Durchmessers ausgestattet werden können.

8. Multifunktionsaggregat nach einem der vorhergehenden Ansprüche, **dadurch gekennzeichnet, dass** die vertikale Drehachse (12) des Multifunktionsaggregats innerhalb eines Gehäuses (14) gelegen ist, das zumindest die vertikalen Bohrspindeln (2) enthält.

9. Multifunktionsaggregat nach einem der vorhergehenden Ansprüche, **dadurch gekennzeichnet, dass** die mindestens eine Säge (6) und/oder die mindestens eine Schnittstelle (16) zumindest teilweise innerhalb eines Bereichs (18) gelegen ist, der durch die am weitesten von der vertikalen Drehachse (12) des Multifunktionsaggregats entfernten vertikalen Bohrspindel (2) während einer vollständigen Verdrehbewegung des Multifunktionsaggregats umschrieben wird.

## Claims

1. Multifunctional unit (1) for machining workpieces preferably consisting at least partially of wood, wood materials, plastics, or the like, having:
a plurality of vertical drill spindles (2),
a plurality of horizontal drill spindles (4), wherein
the multifunctional unit (1) is mounted and driven via a mounting means (10) in such a way that it may be rotated about at least one vertical axis of rotation (12),
**characterised in that**
the multifunctional unit comprises at least one fixed saw (6) comprising at least one saw blade (8) with a horizontal axis of rotation.

2. Multifunctional unit according to claim 1, **characterised in that** the at least one saw (6) is attached to a housing (14) of at least one of the vertical (2) and/or horizontal (4) drill spindles and preferably has a common drive with the vertical and/or horizontal drill spindles.

3. Multifunctional unit according to claim 1 or 2, **characterised in that** it also comprises at least one interface (16) for the attachment of at least one further machining unit.

4. Multifunctional unit according to claim 3, **characterised in that** the at least one interface (16) comprises an attachment surface and is preferably set up to supply an attached unit at least with drive power and/or energy and/or fluids and/or data.

5. Multifunctional unit according to claim 3 or 4, **characterised in that** the at least one unit is a milling unit and/or a flush milling unit with a separating means, in particular a scraper, and/or a multispindle drill head.

6. Multifunctional unit according to any one of the preceding claims, **characterised in that** vertical drill spindles (2) are disposed in at least one row (2') and that at least one further vertical drill spindle (2) is provided which can preferably be equipped with a drill with a diameter deviating from that in the at least one row.

7. Multifunctional unit according to any one of the preceding claims, **characterised in that** horizontal drill spindles (4) are disposed in at least two directions which can be preferably equipped with drills with a different diameter.

8. Multifunctional unit according to any one of the preceding claims, **characterised in that** the vertical axis of rotation (12) of the multifunctional unit is located within a housing (14) containing at least the vertical drill spindles (2).

9. Multifunctional unit according to any one of the preceding claims, **characterised in that** the at least one saw (6) and/or the at least one interface (16) is located at least partially within a region (18) which is circumscribed by the vertical drill spindles (2) located at the furthest distance from the vertical axis of rotation (12) of the multifunctional unit during a complete rotational movement of the multifunctional unit.

## Revendications

1. Ensemble multifonctions (1), pour l'usinage de pièces d'oeuvre, composées au moins partiellement de bois, matériaux ligneux, matières synthétiques ou analogue, avec:
une pluralité de broches de perçage (2) verticales,
une pluralité de broches de perçage (4) horizontales, où
l'ensemble multifonctions (1), par l'intermédiaire d'un dispositif de palier (10), est monté en palier et susceptible d'être entraîné de manière qu'il puisse être tourné autour d'au moins un axe de rotation (12) vertical,
**caractérisé en ce que**
l'ensemble multifonctions (1) comprend au moins une scie (6) disposée rigidement, présentant au moins une lame de scie (8) ayant un axe de rotation horizontal.

2. Ensemble multifonctions selon la revendication 1, **caractérisé en ce que** la au moins une scie (6) est montée sur un boîtier (14) d'au moins l'une des broches de perçage verticales (2) et/ou horizontales (4), et, de préférence, dispose d'un entraînement commun avec les broches de perçage verticales et/ou horizontales.

3. Ensemble multifonctions selon la revendication 1 ou 2, **caractérisé en ce qu'**il présente en outre au moins une interface (16) pour montage d'au moins un autre ensemble multifonctions.

4. Ensemble multifonctions selon la revendication 3, **caractérisé en ce que** la au moins une interface (16) présente une face de montage et, de préférence, est agencée pour alimenter un ensemble monté, au moins en puissance d'entraînement et/ou en énergie et/ou en fluides et/ou en données.

5. Ensemble multifonctions selon la revendication 3 ou 4, **caractérisé en ce que** le au moins un ensemble est un ensemble de fraisage et/ou un ensemble de fraisage en bout avec dispositif de séparation, en particulier racloir, et/ou une tête de perçage à plusieurs broches.

6. Ensemble multifonctions selon l'une des revendications précédentes, **caractérisé en ce que** des broches de perçage verticales (2) sont disposées en au moins une rangée (2'), et **en ce qu'**au moins une autre broche de perçage (2) verticale est prévue, pouvant de préférence être équipée d'un foret dont le diamètre est différent de celui qu'on a dans la au moins une rangée.

7. Ensemble multifonctions selon l'une des revendications précédentes, **caractérisé en ce que** des broches de perçage (4) horizontales sont disposées en au moins deux directions, pouvant être équipées de préférence de forets ayant des diamètres différents.

8. Ensemble multifonctions selon l'une des revendications précédentes, **caractérisé en ce que** l'axe de rotation (12) vertical de l'ensemble multifonctions est situé à l'intérieur d'un boîtier (14), contenant au moins les broches de perçage (2) verticales.

9. Ensemble multifonctions selon l'une des revendications précédentes, **caractérisé en ce que** la au moins une scie (6) et/ou la au moins une interface (16) est/sont placée(s), au moins partiellement, à l'intérieur d'une zone (18), circonscrite par la broche de perçage (2) espacée le plus de l'axe de rotation (12) vertical de l'ensemble multifonctions, pendant un mouvement de rotation complet de l'ensemble multifonctions.
